# EUROPEAN PATENT APPLICATION

(11) **EP 2 221 950 A1**
(43) Date of publication of application: **25.08.2010**
(21) Application number: 09002494.4
(22) Date of filing: 21.02.2009
(51) Int. Cl.: H02M 3/158, H02M 1/36

(54) **Boost converter with start-up circuit**

(71) Applicant: Braun GmbH, 61476 Kronberg im Taunus (DE)
(72) Inventor: Franke, Michael, 64291 Darmstadt (DE); Simeth, Martin, 61462 Königstein (DE); Laschinski, Gerd, 61440 Oberursel (DE)

(57) **Abstract**

The present invention is concerned with an electronic circuit (C) that comprises a first electronic sub-circuit (uC) having an operating voltage that is higher than a supply voltage (*Vbat)* provided by a voltage source (V), and a second electronic sub-circuit (B) that is coupled to the voltage source (V) and to a first voltage input (VI1) of the first electronic sub-circuit (uc), wherein said second electronic sub-circuit (B) comprises a short-time voltage boosting circuit (L1, D1, C1, TA1) that is adapted to provide a voltage at the first voltage input (VI1) for a period long enough to enable a start-up of the first electronic sub-circuit (uC) when the short-time voltage boosting circuit (L1, D1, C1, TA1) is triggered and a controllable voltage boosting circuit (L1, D1, T1, C1) that is adapted to provide a boosted voltage at the first voltage input (VI1), which controllable voltage boosting circuit (L1, D1, T1, C1) is coupled to a control output (CO) of the first electronic sub-circuit (uC) to receive a control signal, and wherein said period is long enough to also allow starting the control of the controllable voltage boosting circuit (L1, D1, T1, C1) by the first electronic sub-circuit (uC).

## Description

### FIELD OF THE INVENTION

The present invention is concerned with electronic circuits that comprise a first electronic sub-circuit that has a higher operation voltage than a supply voltage provided by a voltage source and a second electronic sub-circuit for boosting the supply voltage to the level of the operation voltage to enable operation of the first electronic sub-circuit.

### BACKGROUND OF THE INVENTION

It is known to use a step-up (or boost) converter as second electronic sub-circuit to boost the supply voltage to the level of the operation voltage required by the first electronic sub-circuit. Such a step-up (or boost) converter is relatively expensive and also consumes energy even in case the first electronic sub-circuit is not operational.

It is hence desirable to improve such a known electronic circuit.

### SUMMARY OF THE INVENTION

An improved electronic circuit is given in accordance with claim 1 and a respective method to operate an electronic circuit is given in accordance with claim 11.

An electronic circuit as proposed comprises a first electronic sub-circuit that has an operating voltage that is higher than a supply voltage provided by a voltage source and a second electronic sub-circuit that is coupled to the voltage source and to a first voltage input of the first electronic sub-circuit. The second electronic sub-circuit comprises a short-time voltage boosting circuit that is adapted to provide a voltage at the first voltage input for a period long enough to enable a start-up of the first electronic sub-circuit when the short-time voltage boosting circuit is triggered and a controllable voltage boosting circuit that is adapted to provide a boosted voltage at the first voltage input, which controllable voltage boosting circuit is coupled to a control output of the first electronic sub-circuit to receive a control signal, and further said period is chosen long enough to also allow starting the control of the controllable voltage boosting circuit by the first electronic sub-circuit.

The electronic circuit as proposed makes use of a (manually) triggered short-time voltage boost circuit that adds an auxiliary voltage on top of the supply voltage and the voltage sum is then applied at the first voltage input of the first electronic sub-circuit (the essential component of the short-time voltage boosting circuit might be realized as a voltage doubling capacitor, whose voltage can be manually switched on top of the supply voltage so that the voltage sum is then provided at the first voltage input; the time constant of the capacitor can be chosen such that the period during which a boosted voltage above the require operation voltage is applied at the first voltage input is chosen long enough to start stable operation of the first electronic sub circuit). The period during which the voltage sum of supply voltage and auxiliary voltage is provided is also chosen long enough to start stable control of a controllable voltage boosting circuit by the first electronic sub-circuit. The controllable voltage boosting circuit can be realized as a step-up converter that is controlled by the first electronic sub-circuit so that the controllable voltage boosting circuit only consumes energy when the first electronic sub-circuit is operational. Typically, an initial switch on/off period is sufficient to start the voltage boosting provided by the controllable voltage boosting circuit so that the voltage sum of auxiliary voltage and supply voltage can drop below the operation voltage after the control of the controllable voltage boosting circuit is initiated.

In an embodiment, the first electronic sub-circuit is realized as a microcontroller.

In another embodiment, the short-time voltage boosting circuit comprises a first capacitor that is coupled with a first end to the voltage source and to the first voltage input and with a second end to ground potential and a first manual switch that is coupled with a first end to the second end of the first capacitor and with a second end to the first voltage input. The first capacitor does then serve as voltage doubling capacitor and the manual switch applies the auxiliary voltage that has developed over the first capacitor on top of the supply voltage at the first voltage input.

In a further embodiment, the controllable voltage boosting circuit comprises a series arrangement of a first inductance and a first diode, which first diode is arranged between the first inductance and the first voltage input, and a first switch element that is on a first side coupled between the first inductance and the first diode and with a second side to ground potential and that is coupled with a control side to the control output. The controllable voltage boosting circuit is then realized by discrete electric components as a a controllable step-up converter, which is controllable by the first electronic sub-circuit.

In an even further embodiment, a second switch element is arranged between the first diode and the first voltage input to inhibit unwanted current flow into the first electronic sub-circuit during an off state.

In an embodiment, the electronic circuit comprises at least an electronic element that in operation fulfills a function for the short-time voltage boosting circuit and a function for the controllable voltage boosting circuit. This specifically allows to realize the electronic circuit in an inexpensive an efficient way as a single component serves a function for both sub-circuits.

In another embodiment, the electronic circuit further comprises a voltage limiting element. In a refinement of the previous embodiment, the voltage limiting element is part of the first electronic sub-circuit and comprises a measuring unit for measuring the voltage provided at a second voltage input and a control unit for controlling the control signal in dependence of the measured voltage. In another refinement, the voltage limiting element is a second diode that is coupled with a first end to the first voltage input and with a second end to ground potential.

The invention is also concerned with an electric appliance that comprises an electronic circuit as proposed.

A method to operate an electronic circuit that comprises a first electronic sub-circuit having an operation voltage comprises the steps of:
- providing a supply voltage that is lower than the operation voltage;
- building up an auxiliary voltage over an energy storage element;
- providing essentially the sum of auxiliary voltage and supply voltage at a first voltage input of the first electronic sub-circuit for a period that is long enough to start the first electronic sub-circuit;
- controlling a controllable voltage boosting circuit by a control signal provided by the first electronic sub-circuit, wherein said period is long enough so that also the controlling is started;
- boosting the supply voltage to the level of the operation voltage and providing the boosted voltage at the first voltage input of the first electronic sub-circuit.

In other words, an electronic circuit and a method are proposed to run, e.g., a microcontroller at a voltage supply that is providing a supply voltage lower than the required operational voltage of the microcontroller without using an external boosting circuit, by combining a button triggered short-time voltage boosting circuit for initial voltage supply at a level at or above the operation voltage with a step up converter controlled by the microcontroller for continuously providing a boosted supply voltage after the initial phase.

### BRIEF DESCRIPTION OF THE DRAWINGS

In the following, the proposed electronic circuit will be elucidated by detailed description of exemplary embodiments and by reference to figures. In the figures
- Fig. 1: shows a first electronic sub-circuit that has an external step-up (or boost) converter to boost a supply voltage to a level sufficient for operation of the first electronic sub-circuit;
- Fig. 2: shows a first exemplary embodiment of the proposed electronic circuit; and
- Fig. 3: shows a second exemplary embodiment of the proposed electronic circuit.

### DETAILED DESCRIPTION OF THE INVENTION

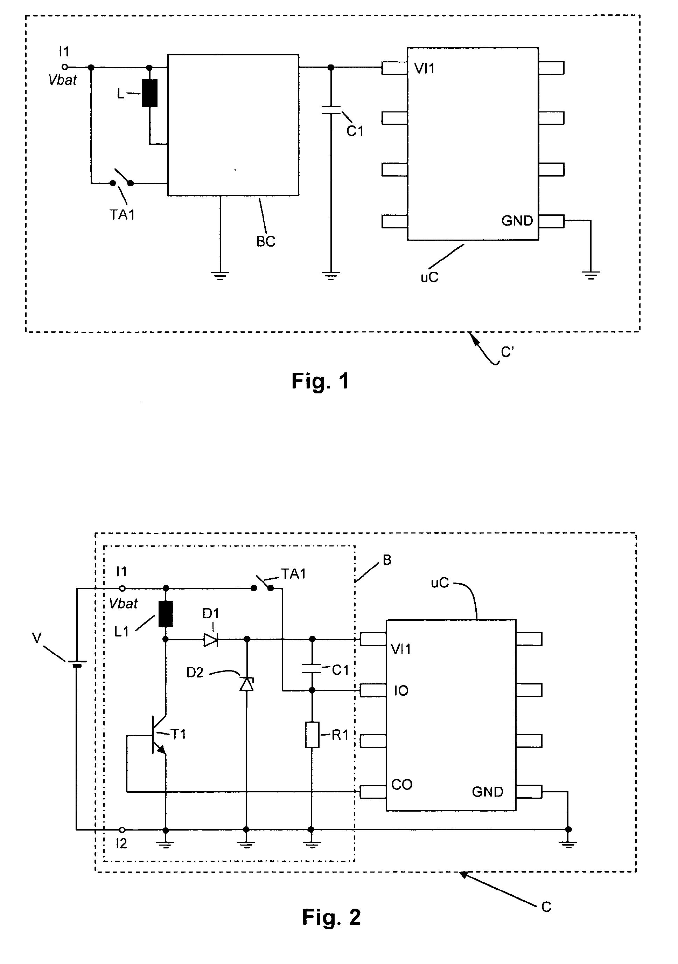

Fig. 1 shows an electronic circuit C' that comprises a first electronic sub-circuit uC (here: a microcontroller) that has an operational voltage V2, which is higher then the supply voltage *Vbat* that is provided by a voltage source (not shown in Fig. 1) at the first terminal 11 of the electronic circuit C'. Hence, first electronic sub-circuit uC does not start operation as long as the voltage provided at a first voltage input VI1 is smaller than the operational voltage V2. In order to generate a voltage at the first voltage input VI1 that is higher than the supply voltage *Vbat* and that is at least as high as the required operational voltage V2, the electronic circuit C' comprises an external step-up converter BC (or: boost converter) that is enabled by a push button TA1. A first capacitor C1 is used to smooth the voltage provided by the external step-up converter BC so that extremely high voltage peaks are not provided at the first voltage input VI1 of the first electronic sub-circuit uC.

Such an external step-up converter BC is relatively expensive and it is desirable to realize an electronic circuit that is less expensive but has the same functionality. Further, the external step-up converter BC always consumes energy, even in phases during which the first electronic sub-circuit is not operational.

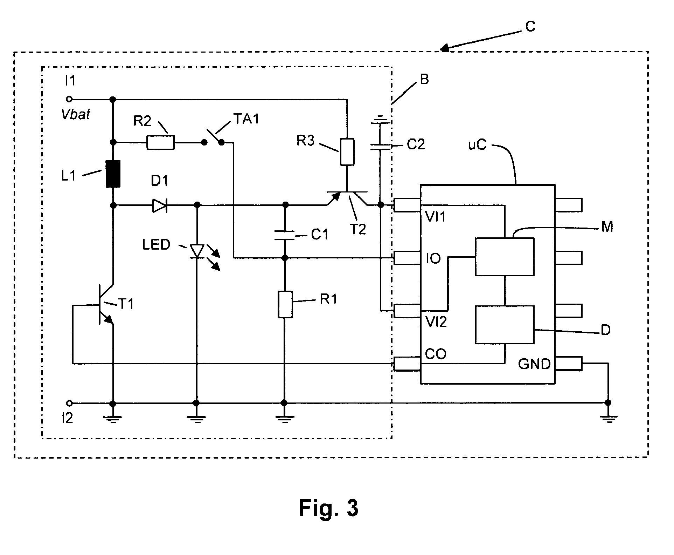

The proposed electronic circuit that overcomes above mentioned problems of price and energy consumption makes use of the capabilities of the first electronic sub-circuit to take over part of the functionality of a step-up converter circuit, e.g. because the first electronic sub-circuit is programmable (the first electronic sub-circuit could be realized as a microcontroller) or comprises a programmable component. The proposed electronic circuit therefore also comprises a second electronic sub-circuit that is used to boost the supply voltage to a level required by the first electronic sub-circuit under control of the first electronic sub-circuit and that is also used to start operation of the first electronic sub-circuit so that a stable control can be initiated. The details of exemplary embodiments of the second electronic sub-circuit are discussed with reference to Fig. 2 and Fig. 3.

Fig. 2 shows a first exemplary embodiment of the proposed electronic circuit C. The electronic circuit C has a first electronic sub-circuit uC that is realized as a microcontroller and a second electronic sub-circuit B that is realized by discrete electronic components. The second electronic sub-circuit B comprises a short-time voltage boosting circuit TA1, C1, D1, R1 and a controllable voltage boosting circuit L1, D1, T1, C1. As will be explained further below, it is a feature of the shown embodiment of the proposed electronic circuit C that at least an electronic component of the second electronic sub-circuit B takes over two functions, namely one function for the short-time voltage boosting circuit and one function for the controllable voltage boosting circuit (said electronic component is hence a shared electronic component that is part of the short-time voltage boosting circuit and of the controllable voltage boosting circuit). The shown specific exemplary embodiment of the proposed electronic circuit C is hence very cost-efficient and also functionally efficient.

The electronic circuit C has a first and a second input terminal I1 and I2 at which a supply voltage *Vbat* provided by a voltage source V such as a battery or an accumulator or an AC-DC converter connected to mains voltage can be supplied. At the first terminal I1, supply voltage *Vbat* will be provided and the second input terminal I2 is connected to ground potential. A first inductor L1 is coupled with a first side to the first input terminal I1 and also a manual switch TA1 is coupled with a first side to the first input terminal I1. As will be explained in more detail below, the manual switch TA1 can, e.g., be realized as an on/off switch or as a pushbutton. A second side of the first inductor L1 is coupled to a first side (collector electrode) of a first switch element T1 (in the shown embodiment realized as an npn transistor); a second side (emitter electrode) of the first switch element T1 is coupled to ground potential. The second side of the first inductor L1 is coupled to the anode of a first diode D1; the cathode of the first diode D1 is coupled to a first voltage input VI1 of the first electronic sub-circuit uC. A first side of a first capacitor C1 is coupled to the cathode of the first diode D1 and a second side of the first capacitor C1 is coupled to a second side of the manual switch TA1. The second side of the manual switch TA1 and the second side of the first capacitor C1 are also coupled to an input/output terminal IO of the first electronic sub-circuit uC. The second side of the first capacitor C1 is further coupled over a first resistor R1 to ground potential. A control output CO of the first electronic sub-circuit uC is coupled to a control side (gate electrode) of the first switch element T1. In the shown embodiment, a second diode D2, realized as a Zener diode, has its cathode coupled between the cathode of the first diode D1 and the first voltage input VI1. The anode of the second diode D2 is coupled to ground potential. The second diode D2 serves as a voltage limiting element that protects the first electronic sub-circuit uC from overvoltage. The function of the second diode D2 can also be taken over by the first electronic sub-circuit uC itself as will be discussed with reference to Fig. 3 and hence the second diode D2 is insofar an optional component only. A ground connector terminal GND of the first electronic sub-circuit uC is connected to ground potential.

The proposed electronic circuit C allows that the voltage supply V provides a supply voltage *Vbat* that is smaller than the operational voltage V2 that is required by the first electronic sub-circuit uC, hence *V2 > Vbat.* If such a high operational voltage V2 is not supplied, the first electronic sub-circuit uC cannot start operation. As an example, the first electronic sub-circuit uC could be realized as a microcontroller having an operational voltage V2 of 1.8 - 2 Volt, while the voltage supply V is realized as a single battery or accumulator that provides a typical supply voltage *Vbat* in the range of 1.1 - 1.5 Volt, where the exact value of *Vbat* depends on the charge state of the battery or accumulator.

In order to provide an operational voltage V2 that is higher than the supply voltage *Vbat,* the second electronic sub-circuit B comprises a controllable voltage boosting circuit L1, D1, T1, C1 that is controlled by a control signal that is generated by the first electronic sub-circuit uC itself. Obviously, as long as the first electronic sub-circuit uC has not started operation, a control signal cannot be provided and the controllable voltage boosting circuit L1, D1, T1, C1 cannot boost the supply voltage *Vbat.* This is overcome by the short-time voltage boosting circuit TA1, C1, R1, D1. The function of the short-time voltage boosting circuit TA1, C1, R1, D1 and of the controllable voltage boosting circuit L1, D1, T1, C1 is described in the following.

In an off state, the first electronic sub-circuit uC is not operational and also the controllable voltage boosting circuit L1, D1, T1, C1 does not receive any control signal so that the supply voltage *Vbat* that is provided at the voltage input terminals 11 and 12 is not boosted. During the off state, the first capacitor C1 of the short-time voltage boosting circuit TA1, C1, R1, D1 is charged and the voltage across the first capacitor C1 becomes *Vbat.* The voltage provided at the first voltage input VI1 of the first electronic sub-circuit uC is hence also *Vbat.* By closing the manual switch TA1, the second side of the first capacitor C1 that had been at ground potential is put on *Vbat.* As a result, the voltage *V(VI)* provided at the first voltage input VI1 of the first electronic sub-circuit uC is lifted to two times *Vbat* minus the voltage drop over the first diode D1, *V(VI)* = *2·Vbat- V_{D}.* The voltage drop over L1 (having a resistance of a few mOhms) can be neglected The proposed dimension of C1 is such that the voltage *V(VI1)* is presented long enough at a level higher than the required minimum operational voltage V2 by the first electronic sub-circuit uC (e.g. in the above given example, that the voltage *V(VI1)* is above 1.8 Volt) to enable start and operation of the first electronic sub-circuit uC. In an embodiment, the first electronic sub-circuit uC is realized as a microcontroller that has a regular operational voltage of V2 = 2 Volt but can still operate also at a voltage *V(VI1)* of about 3 Volts. The voltage drops across the first diode D1 and across the first inductor L1 are negligible. The first capacitor C1 is dimensioned such that the voltage *V(VI1)* provided at the first voltage input VI1 is above the operational voltage V2 for about 1 ms, which is sufficient for the wake-up of the first electronic sub-circuit uC and for starting the controllable voltage boosting circuit L1, D1, T1, C1 by a first on/off period of the control signal. Obviously, the first capacitor C1 is adapted to the respective time constant of the first electronic sub-circuit uC to enable the wake-up and the control of the controllable voltage boosting circuit L1, D1, T1, C1.

In its operational state, the first electronic sub-circuit uC provides a control signal (typically, a pulse-width modulation signal) via a control output CO. The control signal repeatedly switches the first switch element T1 on and off (i.e. the first switch element T1 repeatedly becomes conductive and non-conductive). The first inductor L1, the first diode D1, and the first capacitor C1 then work together as is known from a boost (or step-up) converter. The second diode D2, here realized as a Zener diode, works as a voltage limiting element to protect the first electronic sub-circuit uC from overvoltage. The first electronic sub-circuit uC takes over the function of the switch control that is usually part of an external step-up converter circuit (BC in Fig. 1). But in contrast to such an external step-up converter circuit, the proposed electronic circuit C can be realized cheaper as less expensive electronic components are required, which is a result of the first electronic sub-circuit uC taking over the function of the switch control. In case that the first electronic sub-circuit uC is realized as a microcontroller, the generation of the control signal can be implemented as a software routine. Further, additional cost savings come from the fact that several electronic components take over two functions. The first diode D1 has the function of a blocking diode for the short-time voltage boosting circuit R1, C1, TA1, D1 and for the controllable voltage boosting circuit L1, D1, T1, C1. The first capacitor C1 takes over the function of a voltage pulse provider for the short-time voltage boosting circuit C1, TA1, D1, R1 and as smoothing capacitor for the controllable voltage boosting circuit L1, D1, T1, C1.

The first inductor L1 can also be realized by a motor inductance as is known from e.g. international patent application WO 02/15374 A1.

Fig. 3 shows a circuit diagram for another exemplary embodiment of a proposed electronic circuit C that comprises a first electronic sub-circuit uC, here again realized by a microcontroller, and a second electronic sub-circuit B that is realized from discrete electronic components. The proposed electronic circuit C has two input terminals I1 and I2. At the first input terminal I1 a supply voltage *Vbat* is provided by a voltage source as was described with reference to Fig. 1. The second input terminal I2 is connected to ground potential. The first input terminal I1 is coupled to a first side of a first inductor L1, a first side of a second resistor R2 and a first side of a third resistor R3. The second side of the first inductor L1 is coupled to a first side (collector electrode) of a first switch element T1 and to the anode of a first diode D1. The cathode of the first diode D1 is coupled with a first side (emitter electrode) of a second switch element T2 (here realized a pnp transistor); a second side (collector electrode) of the second switch element T2 is coupled to a first voltage input VI1 and to a second voltage input VI2 of the first electronic sub-circuit uC. The second side of the third resistor R3 is coupled to a control side (gate) of the second switch element T2. The cathode of the first diode D1 is also coupled with a first side of a first capacitor C1 and with the anode of a light emitting diode LED. The second side of the first capacitor C1 is coupled to an input/output terminal IO of the first electronic sub-circuit uC, to a first side of a first resistor R1 and to a first side of a manual switch TA1. The second side of the manual switch TA1 is coupled to the second side of the third resistor R3. The second side of the first resistor R1, the cathode of the light emitting diode LED and a second side (emitter electrode) of the first switch element T1 are coupled to ground potential. A control output CO of the first electronic sub-circuit uC is coupled to a control side (gate) of the first switch element T1. A ground connector terminal GND of the first electronic sub-circuit uC is connected to ground potential. The second electronic sub-circuit B comprises a short-time voltage boosting circuit C1, TA1, R1, R2, L1, D1, T2, R3 and a controllable voltage boosting circuit L1, D1, T1, C1, T2, R3. The second electronic sub-circuit B further comprises the light emitting diode LED that is, e.g., used to display information such as the operational state to a user of the electronic circuit C, and a second capacitor C2 that is connected between the first voltage input VI1 and ground potential. The capacitance of the second capacitor C2 is chosen to be much smaller than the capacitance of the first capacitor C1. The second capacitor C2 could also be attributed to the first electronic sub-circuit uC.

In the embodiment of the proposed electronic circuit C according to Fig. 3, the second electronic sub-circuit B does not comprise a second diode as voltage limiting element (even though a voltage limiting function can also be attributed to the light emitting diode LED). The first electronic sub-circuit uC can take over the function of a voltage limiting element. To enable this, the first electronic sub-circuit uC comprises a measurement unit M (which might be realized as a software routine running on the microcontroller) that receives the voltage *V(VI2)* provided at the second voltage input VI2, which is the same voltage that is provided as voltage *V(VI1)* at the first voltage input VI1 of the first electronic sub-circuit uC. The measurement unit M compares the voltage *V(VI2)* provided at the second voltage input VI2 with an internal reference voltage and the comparison result is conveyed to a control unit D (which may likewise be realized as a software routine running on the microcontroller). The control unit D modifies the control signal in such a way that the controllable voltage boost circuit L1, D1, T1, C1, T2, R3 provides a higher or a lower boosted voltage in case that the comparison results indicates that the voltage provided to the first electronic sub-circuit uC is lower or higher than the reference voltage, respectively (i.e. the duty cycle of the pulse width modulated control signal is varied accordingly by the control unit D).

The second electronic sub-circuit B makes further use of the boosted supply voltage by energizing the light emitting diode LED with the boosted voltage. Thus, a blue or white LED having a forward voltage of about 3 - 4 Volt can be energized. Additionally, the first electronic sub-circuit uC can vary the boosted voltage by modifying the control signal so that the boosted voltage drops below 3 Volt at which voltage the white or blue LED is not emitting. Hence, the first electronic sub-circuit uC can switch on and off the light emitting diode LED.

The second switch element T2 is used to inhibit a current flow through the first inductor L1, the first diode D1 and the first electronic sub-circuit uC. The second switch element T2 is closed as long as the controllable voltage boosting circuit L1, D1, T1, C1, T2, R3 is not operational (is not controlled by the first electronic sub-circuit). In this off state of the electronic circuit C, no energy is consumed by the first electronic sub-circuit uC. This results in a very low current consumption, when the first electronic sub-circuit uC is not in operational mode. Further, the second resistor R2 was introduced between the first input terminal 11 and the second side of the manual switch TA1 to enable the usage of the first capacitor C1 as buffering capacitor for the first electronic sub-circuit uC (which is an additional functionality of the first capacitor C1 beyond its function as voltage doubling element for the short-time voltage boost circuit). The first electronic sub-circuit uC can switch the input/output terminal IO to ground potential, which allows for this usage of the first capacitor C1. The second resistor R2 is then used to avoid a possible short circuit between the first input terminal I1 and ground potential if the manual switch TA1 is closed. By shortly switching the input/output terminal IO into an input state, closing operations of the manual switch TA1 can be determined (e.g. by analyzing the digitalized voltage present at the input/output terminal IO). Therefore, TA1 can be realized as push button. The remainder of the second electronic sub-circuit B functions essentially as was described with reference to Fig. 1.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. Electronic circuit (C) comprising:
a first electronic sub-circuit (uC) having an operating voltage that is higher than a supply voltage (*Vbat*) provided by a voltage source (V); and
a second electronic sub-circuit (B) that is coupled to the voltage source (V) and to a first voltage input (VI1) of the first electronic sub-circuit (uC);
wherein said second electronic sub-circuit (B) comprises a short-time voltage boosting circuit (L1, D1, C1, TA1) that is adapted to provide a voltage at the first voltage input (VI1) for a period long enough to enable a start-up of the first electronic sub-circuit (uC) when the short-time voltage boosting circuit (L1, D1, C1, TA1) is triggered and a controllable voltage boosting circuit (L1, D1, T1, C1) that is adapted to provide a boosted voltage at the first voltage input (VI1), which controllable voltage boosting circuit (L1, D1, T1, C1) is coupled to a control output (CO) of the first electronic sub-circuit (uC) to receive a control signal, and wherein said period is long enough to also allow starting the control of the controllable voltage boosting circuit (L1, D1, T1, C1) by the first electronic sub-circuit (uC).

2. Electronic circuit according to claim 1, wherein the first electronic sub-circuit (uC) is a microcontroller.

3. Electronic circuit according to claim 1, wherein the short-time voltage boosting circuit (R1, D1, C1, TA1) comprises a first capacitor (C1) that is coupled with a first end to the voltage source (V) and to the first voltage input (VI1) and with a second end to ground potential and a first manual switch (TA1) that is coupled with a first end to the second end of the first capacitor (C1) and with a second end to the first voltage input (VI1).

4. Electronic circuit according to claim 1, wherein the controllable voltage boosting circuit (R1, D1, T1, C1) comprises a series arrangement of a first inductance (L1) and a first diode (D1), which first diode (D1) is arranged between the first inductance (L1) and the first voltage input (VI1), and a first switch element (T1) that is on a first side coupled between the first inductance (L1) and the first diode (D1) and with a second side to ground potential and that is coupled with a control side to the control output (CO).

5. Electronic circuit according to claim 1, wherein a second switch element (T2) is arranged between the first diode (D1) and the first voltage input (VI1) to inhibit unwanted current flow into the first electronic sub-circuit (uC) during an off state.

6. Electronic circuit according to claim 1 that comprises at least an electronic element (D1; C1) that in operation fulfills a function for the short-time voltage boosting circuit (R1, D1, C1, TA1) and a function for the controllable voltage boosting circuit (L1, D1, T1, C1).

7. Electronic circuit according to claim 1 that further comprises a voltage limiting element (D2; LED; M, D).

8. Electronic circuit according to claim 7, wherein the voltage limiting element (M, D) is part of the first electronic sub-circuit (uC) and comprises a measuring unit (M) for measuring the voltage provided at a second voltage input (VI2) and a control unit (D) for controlling the control signal in dependence of the measured voltage.

9. Electronic circuit according to claim 7, wherein the voltage limiting element (D2) is a second diode that is coupled with a first end to the first voltage input (VI1) and with a second end to ground potential.

10. Electric appliance comprising an electronic circuit (C) according to any one of claims 1-9.

11. Method to operate an electronic circuit (C) that comprises a first electronic sub-circuit (uC) that has an operation voltage comprising the steps of:
a) providing a supply voltage (*Vbat*) that is lower than the operation voltage;
b) building up an auxiliary voltage over an energy storage element (C1);
c) providing essentially the sum of auxiliary voltage and supply voltage at a first voltage input (VI1) of the first electronic sub-circuit (uC) for a period that is long enough to start the first electronic sub-circuit (uC);
d) controlling a controllable voltage boosting circuit (L1, D1, T1, C1) by a control signal provided by the first electronic sub-circuit (uC), wherein said period is long enough so that also the controlling is started;
e) boosting the supply voltage to the level of the operation voltage and providing the boosted voltage at the first voltage input (VI1) of the first electronic sub-circuit (uC).
